# EUROPÄISCHE PATENTSCHRIFT

(11) **EP 2 556 937 B1**
(45) Veröffentlichungstag und Bekanntmachung des Hinweises auf die Patenterteilung: **11.05.2016**
(21) Anmeldenummer: 11176795.0
(22) Anmeldetag: 08.08.2011
(51) Int. Cl.: B29C 44/12, B29C 45/00, B29C 44/58, B29C 69/00, B29L 31/30

(54) **Stanz- und Schäumwerkzeug sowie Verfahren**
Stamping and foaming tool and method
Outil d'estampillage et de moussage ainsi que procédé

(43) Veröffentlichungstag der Anmeldung: 13.02.2013
(73) Patentinhaber: FRIMO Group GmbH, 49504 Lotte (DE)
(72) Erfinder: Dipl.Ing. Zaviska, Zdislav, 11000 Praha 1 (CZ); Hazdra, Stanislav, 289 31 Bobnice okres Nymburk (CZ); Dipl.Ing. Ring, René, 49124 Georgsmarienhütte (DE)
(74) Vertreter: Hoffmann Eitle

(56) Entgegenhaltungen:
- EP-A1- 2 052 833
- EP-A1- 2 113 429
- WO-A1-2010/124751
- DE-A1- 10 034 009
- DE-A1- 19 651 532
- US-A- 5 558 731
- US-A- 5 665 285

## Beschreibung

### Technisches Gebiet

Die vorliegende Erfindung betrifft ein Werkzeug, gemäß Anspruch 1, sowei ein Verfahren, gemäß Anspruch 5, zur Herstellung von Innenausstattungsbauteilen, beispielsweise einer Instrumententafel im Bereich des Automobilbaus. Derartige Innenausstattungsbauteile werden mit einem Schäumverfahren hergestellt, wobei Öffnungen vorzusehen sind (bspw. für Einbauteile wie Personenanströmer).

### Stand der Technik

Im Stand der Technik sind Werkzeuge und entsprechende Verfahren bekannt, mit denen Innenausstattungsbauteile für den Automobilbau durch Schäumen erzeugt werden. Hierbei wird beispielsweise ein Träger sowie eine Dekoroberfläche in ein solches Werkzeug eingebracht, das Werkzeug geschlossen und der im Werkzeug ausgebildete Hohlraum wird anschließend mit PU-Schaum ausgeschäumt wird(geschlossenes Schäumen). Alternativ ist auch ein sogenanntes offenes Schäumen bekannt, bei dem das Werkzeug beim Einbringen des PU-Schaums noch geöffnet ist. Nach einem ersten Aushärten des Schaums wird das Innenausstattungsbauteil aus dem Werkzeug entnommen, und in einem Zwischenlager über einen bestimmten Zeitraum vorgehalten, damit das Schaummaterial ausreagieren kann.

Anschließend kann es erforderlich sein, bestimmte Bereiche des Innenausstattungsbauteils zu entfernen um beispielsweise Durchgänge in diesem auszubilden. Ein derartiges Ausbilden von Durchgängen kann durch Ausfräsen oder Ausstanzen dieser Bereiche durchgeführt werden.

Allerdings haben die bekannten Verfahren den Nachteil, dass eine relativ lange Produktionszeit bis zur Fertigstellung des Innenausstattungsbauteils nötig ist. Ferner ist verstärkter manueller Einsatz erforderlich. Dies wiederum führt zur erhöhten Herstell- und Investitionskosten.

Als weiterer Nachteil hat sich gezeigt, dass durch das nachträgliche Bearbeiten des Innenausstattungsbauteils zu einer reduzierten Genauigkeit führt, denn das Innenausstattungsbauteil muss für den Beschnitt in einem weiteren positionsgenau Werkzeug ausgerichtet werden.

Als Stand der Technik ist die EP 2 052 833 A1 bekannt, die ein Verfahren und eine Vorrichtung zur Herstellung eines Formteils mit einer Sollbruchlinie für eine Airbagöffnung betrifft. Beim Herstellungsprozess ragt-ein Schneidmesser bzw. eine Perforationsnadel in eine erste Kavität eines Formwerkzeugs hinein.

Es ist die EP 2 113 429 A1 bekannt, die eine Vorrichtung mit einem mindestens zweistufigen Formwerkzeug mit einem Formwerkzeugkern und einem ersten Formgegenstück betrifft. Ferner weist die Vorrichtung zusätzlich im Formwerkzeugkern verschiebbar angeordnete Perforationswerkzeuge auf, mit deren Hilfe während des Herstellungsprozesses des Innenverkleidungsbauteils in das Bauteil bereits Sollbruchlinien eingebracht werden können. Als Perforationswerkzeuge sind verschiebbar angeordnete Schneidmesser oder Perforationsnadeln geeignet.

Ferner ist die WO 2010/124751 A1 bekannt, die eine Vorrichtung zur Herstellung eines aus einem Träger und einer geschäumten Schicht bestehend Kunststoffformteils für ein Innenverkleidungsbauteil für ein Kraftfahrzeug betrifft, wobei die Vorrichtung ein mehrteiliges Formwerkzeug mit einem Formwerkzeugkern und einer Formwerkzeugmatritze umfasst, wobei in dem zur Aufnahme des Trägers bestimmten Formwerkzeugteil Stanzwerkzeug integriert sind.

Ferner ist die DE 196 51 532 A1 zu nennen, die eine Airbag-Abdeckung betrifft. Ein konkaver Abschnitt eines zerbrechlichen Abschnitts kann mit Hilfe eines Ultraschallschweißgeräts oder eines erwärmten Schneidgeräts bzw. durch Einsatz eines mit hochfrequenten Wellen arbeitenden Schneidgeräts ausgebildet werden.

### Darstellung der Erfindung

Die vorliegende Erfindung wurde durchgeführt, um die zuvor genannten Probleme zu lösen, und es ist ein Ziel der vorliegenden Erfindung, die Produktionszeit und Produktionsschritte bei der Herstellung eines Innenausstattungsbauteils (beispielsweise Instrumententafel) zu reduzieren.

Zur Lösung stellt die vorliegende Erfindung eine Vorrichtung nach Anspruch 1 sowie ein Verfahren nach Anspruch 5 bereit. Weitere bevorzugte Ausführungsformen sind den abhängigen Ansprüchen zu entnehmen.

Kerngedanke der vorliegenden Erfindung ist es, zwei getrennte Arbeitsabläufe in einem gemeinsamen Arbeitsablauf zu vereinen. Hierzu wird ein Stanzwerkzeug direkt an einem Schäumwerkzeug angebracht, und das Einbringen von Öffnungen in das auszubildende Innenausstattungsbauteil wird während des Schäumvorgangs durchgeführt.

### Eine Vorrichtung zur Herstellung von

Innenausstattungsbauteilen gemäß der vorliegenden Erfindung weist hierbei ein Oberteil und ein Unterteil auf. Das Ober- und Unterteil sind hierbei zwei Werkzeughälften, von denen eine bewegbar ist. Mit diesen kann ein Hohlraum definiert werden, in den ein Schaummaterial einführbar ist. Ferner ist erfindungsgemäß am Ober- und/oder Unterteil eine Stanzvorrichtung angebracht ist, die ein Schneidmittel, insbesondere ein Schneidmesser aufweist, das vom Ober- in das Unterwerkzeug oder umgekehrt einfahrbar ist.

Nachdem die Stanzvorrichtung am Ober- und/oder Unterteil angebracht ist, wird im Rahmen dieser Erfindung eine Vereinigung zweier Vorrichtungen bereitgestellt, und somit eine kombinierte Schäum- und Stanzvorrichtung erhalten. Ist die Stanzvorrichtung am Oberteil vorgesehen, so wird das Schneidmittel in Richtung des Unterteils ausgestellt. Im Falle der Anbringung am Unterteil geschieht dies in Richtung des Oberteils. Auch kann es vorgesehen sein, eine Stanzvorrichtung am Oberteil, und eine weitere Stänzvorrichtung am Unterteil vorzusehen. Diese können sich beim Durchführen des Beschnitts des auszubildenden Innenausstattungsbauteils aufeinander zu bewegen, um einen Durchgang/ eine Öffnung im Innenausstattungsbauteil auszubilden. Alternativ können auch an verschiedenen Bereichen des Innenausstattungsbauteils ausgehend von verschiedenen Seiten Öffnungen vorgesehen werden.

Durch die Vereinigung einer Schäumvorrichtung mit einer Stanzvorrichtung ist es möglich, verschiedene Arbeitsgänge während eines einzigen Herstellungszyklus durchzuführen, nämlich das Einbringen von Schaummaterial und das Vorsehen von Öffnungen im Innenausstattungsbauteil.

Erfindungsgemäß ist das Schneidmittel beheizbar, und zwar insbesondere mittels Heizpatronen. Durch diese Maßnahme ist es möglich, das Schneidmittel auf eine auf das Material abgestimmte Temperatur zu bringen. Diese Temperatur kann beispielsweise im Bereich von 170-220°C liegen. Die Abstimmung erfolgt hierbei unter Einbeziehung der Eigenschaften des Trägers, des Schaummaterials und/oder der Dekoroberfläche.

Ferner ist erfindungsgemäß an der Stanzvorrichtung mindestens ein Auswerfer vorgesehen, der mit der Bewegung des Schneidmittels zusammenwirken kann. Somit ist es möglich, die durch die Stanzvorrichtung beschnittenen Bereiche des Innenausstattungsbauteils beim oder nach dem Öffnen des Oberteils vom übrigen Bereich des Innenausstattungsbauteils zu trennen.

In einer bevorzugten Ausführungsform weist das Schneidmittel mehrere Schneidmittelabschnitte auf. Durch die entsprechenden Abschnitte werden jeweils Öffnungen in das Innenausstattungsbauteil eingebracht. Somit ist es möglich, mit der erfindungsgemäßen Vorrichtung mehrere Öffnungen gleichzeitig mit einer Stanzvorrichtung einzubringen.

Zur Bewegung der Schneidmittel können verschiedene Antriebe vorgesehen sein. Rein beispielhaft wird auf eine pneumatische, hydraulische, elektrische oder mechanische Antriebsart verwiesen.

Ferner betrifft die vorliegende Erfindung ein Verfahren zur Herstellung eines Innenausstattungsbauteils mit Öffnungen gemäß Anspruch 5. Im Rahmen dieses Verfahrens sind die folgenden Schritte vorgesehen: zuerst wird ein Träger sowie eine Dekoroberfläche ein eine Vorrichtung zum Ausbilden eines Innenausstattungsbauteils eingelegt, wobei der Träger insbesondere im Oberteil, und die Dekoroberfläche insbesondere im Unterteil der Vorrichtung eingelegt wird. Nachfolgend wird ein Schaummaterial in einen zwischen dem Träger und der Dekoroberflächeausgebildeten Bereich eingeführt. Dies kann bei einer geöffneten oder geschlossenen Vorrichtung erfolgen. Bei der geöffneten Vorrichtung wird zuerst das Schaummaterial eingebracht, und anschließend die Vorrichtung geschlossen, insbesondere das Oberteil in Richtung des Unterteils geführt. Bei der geschlossenen Vorrichtung wird zuerst die Vorrichtung geschlossen, insbesondere das Oberteil in Richtung des Unterteils geführt, und anschließend das Schaummaterial eingebracht.

Erfindungsgemäß ist es vorgesehen, dass das Schneidmittel auf eine bestimmte Temperatur erwärmt wird, insbesondere im Bereich zwischen 170-220°C. Hierdurch wird gewährleistet, dass beim Durchführen des Beschnitts das Schaummaterial/der Träger/die Folie nicht ausgebrochen wird.

Zur Ausbildung der Öffnungen wird das Schneidmittel einer Stanzvorrichtung verfahren, damit das Schneidmittel zumindest abschnittsweise in den Hohlraum eindringt. Nach Durchführen des Beschnitts kann das Strukturbauteil dann entnommen werden.

Durch das erfindungsgemäße Verfahren wird eine Kombination eines Schäumvorgangs und eines Beschnitts in einem gemeinsamen Zyklus bereitgestellt. Hierdurch können die bereits zur oben beschriebenen Vorrichtung genannten Vorteile erreicht werden.

Gemäß dem Verfahren werden die durch die Verfahrbewegung des Schneidmittels ausgestanzten Abschnitte des Innenausstattungsbauteils mittels eines Auswerfers aus dem Innenausstattungsbauteil entfernt. Demnach ist es nicht mehr erforderlich, die bereits ausgestanzten Abschnitte in einem nachfolgenden Arbeitsgang aus dem Strukturbauteil zu entfernen.

Das Verfahren des Schneidmittels kann von der Seite des Trägeres und/oder der Seite der Dekoroberflächestattfinden. Jedoch ist es möglich, den Schnitt gezielt von einer der Seiten zu führen und gegebenenfalls zwei Schnittoperationen zu kombinieren.

Ferner kann durch das Verfahren des Schneidmittels ein sogenannter Teilbeschnitt durchgeführt werden, bei dem entweder der Träger oder die Dekoroberfläche beschnitten wird. Der Teilbeschnitt betrifft hierbei ebenso das zwischen dem Träger und der Dekoroberfläche befindliche Schaummaterial. Allerdings wird beim Teilbeschnitt neben dem Träger mit Schaummaterial oder der Dekoroberfläche mit Schaummaterial das gegenüberliegende Element (Träger oder Dekoroberfläche) nicht beschnitten.

### Kurze Beschreibung der Zeichnungen

- Figur 1: ist eine schematische Schnittansicht der erfindungsgemäßen Vorrichtung.
- Figur 2: ist eine Detailansicht des in das Schäumwerkzeug integrierten Stanzwerkzeugs.
- Figur 3: ist eine perspektivische Darstellung des erfindungsgemäßen Stanzwerkzeuges.

### Detaillierte Beschreibung der bevorzugten Ausführungsform

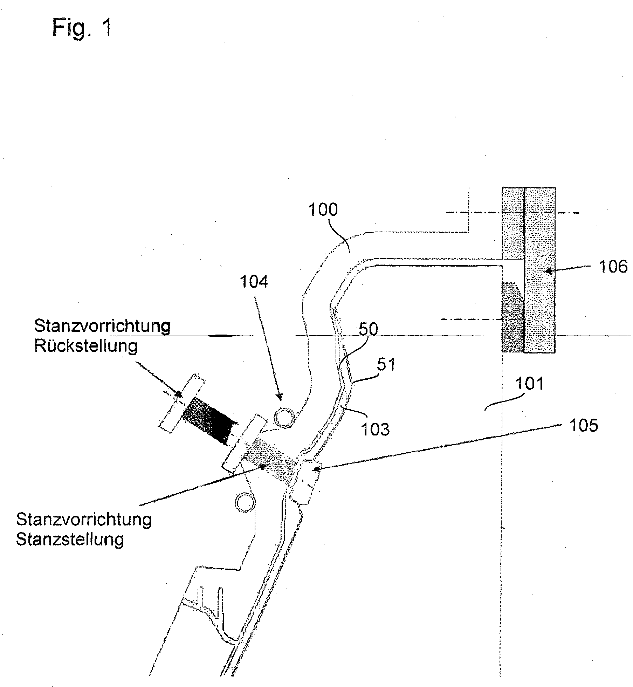

Nachfolgend wird anhand der Figuren 1-3 rein beispielhaft die bevorzugte Ausführungsform der vorliegenden Erfindung sowie weitere Varianten beschrieben. Es ist für den Fachmann ersichtlich, dass einzelne Teilaspekte der beschriebenen Ausführungsform und der weiteren Varianten miteinander kombinierbar sind, ohne von der technischen Lehre dieser Anmeldung abzuweichen.

Figur 1 zeigt eine schematische Schnittansicht der erfindungsgemäßen Vorrichtung. Diese ist ein kombiniertes Stanz- und Schäumwerkzeug.

Die in Figur 1 dargestellte Vorrichtung weist ein Oberteil 100 auf, das in Richtung eines Unterteils 101 bewegt werden kann. Der zwischen dem Ober- und Unterteil 100, 101 ausgebildete Bereich ist zur Herstellung eines Innenausstattungsbauteils, wie einer Instrumententafel, eingerichtet. Ferner ist eine Stollenführung 106 vorgesehen.

Hierzu wird am Oberteil 100 ein Träger 50 angebracht, während am Unterteil 101 eine Dekoroberfläche 51 vorgesehen ist. Im geschlossenen Zustand der Werkzeuges, der in Figur 1 dargestellt ist, wird zwischen dem Unterteil 101 und dem Oberteil 100 der kombinierten Stanz- und Schäumvorrichtung ein Holraum 103 ausgebildet, der sich zwischen dem eingelegten Träger 50 und der am Unterteil vorgesehenen Dekoroberfläche 51 erstreckt.

In diesen Hohlraum wird, wie nachfolgend detailliert erläutert, beim Betrieb der kombinierten Stanz- und Schäumvorrichtung ein Schaummaterial (nicht gezeigt) eingebracht, das somit eine Verbindung zwischen dem Träger 50 und der Dekoroberfläche 51 herstellt. Der Träger 50, das Schaummaterial sowie die Dekoroberfläche 51 bilden nach Abschluss des Herstellungsverfahrens das Innenausstattungsbauteil aus.

Am Oberteil 100 ist eine Stanzvorrichtung 1 vorgesehen, die in Figur 1 in einer Rückzugstellung und in einer Stanzstellung gezeigt ist. In der Stanzstellung dringt die Stanzvorrichtung 1 durch den Träger 50, den Hohlraum 103 (mit Schaummaterial gefüllt) und in die Dekoroberfläche 51 ein. Der Abstand zur gegenüberliegenden Lagerfläche des Unterteils 101 beträgt in der Stanzstellung bspw. wenige Zehntel Millimeter. Allerdings ist es neben dieser Variante mit einem sogenannten Stanzspalt möglich, einen Teilbeschnitt durchzuführen (bspw. Dekor und Schaum wird beschnitten, Träger nicht), oder aber vollständig durch zustanzen. Bei der letzten Variante werden Dekor, Schaum und Träger vollständig durchtrennt, und das Schneidmesser dringt in eine Nut auf der gegenüberliegenden Werkzeugseite ein. All diese Varianten können bei einer der nachfolgend erläuterten Verfahrensvarianten zur Anwendung kommen.

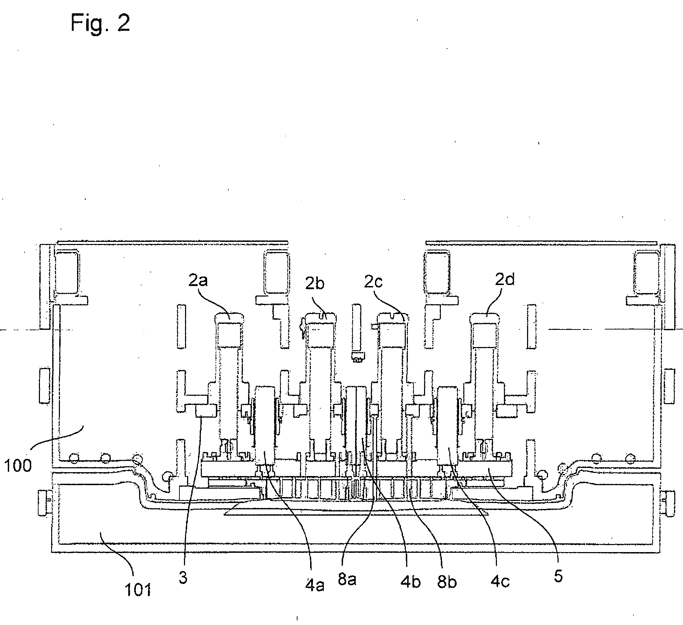

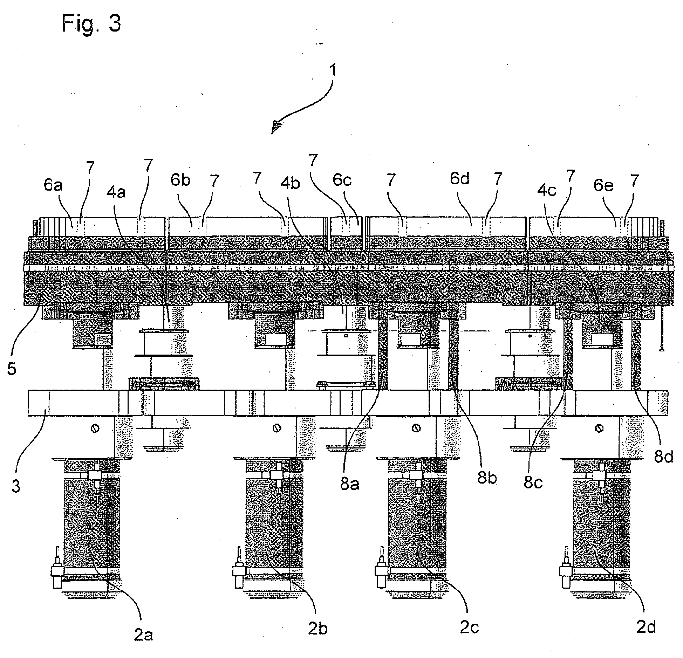

Anhand der Figuren 2 und 3 soll die Stanzvorrichtung 1 nun im Detail beschrieben werden.

Die Stanzvorrichtung 1 weist einen Stützabschnitt 3 auf, über den die Stanzvorrichtung 1 mit dem Oberteil 100 verbunden ist. Am Stützabschnitt 3 sind mehrere Pneumatikzylinder 2a-2d angebracht, mit denen die Verfahrbewegung eines beweglichen Abschnitts 5 eingeleitet wird. Zur Führung dieser Verfahrbewegung sind am Stützabschnitt 3 ferner drei Führungssäulen 4a-4c mit Rollenführung angebracht, die eine weitere Verbindung zum beweglichen Abschnitt 5 herstellen.

Am beweglichen Abschnitt 5 ist ferner in der Richtung der Verfahrbewegung ein Schneidmesser 6 vorgesehen. Im Bereich des Schneidmessers 6 sind mehrere Heizpatronen 7 am beweglichen Abschnitt 5 angebracht. Das Heißmesser 6 ist in der beschriebenen Ausführungsform länglich ausgebildet, und in mehrere Schneidmesserabschnitte 6a-6e unterteilt. Mit diesen Schneidmesserabschnitten 6a-6e werden einzelne Öffnungen im auszubildenden Innenausstattungsbauteil vorgesehen. Die Heizpatronen 7 sind entsprechend auf die einzelnen Schneidmesserabschnitte 6a-6e verteilt, so dass jeder Schneidmesserabschnitt 6a-6e zumindest eine Heizpatrone 7 aufweist.

Darüber hinaus sind am Stützabschnitt 3 mehrere sich in Richtung des beweglichen Abschnitts 5 erstreckende Auswerfer 8a-8d vorgesehen, die mit dem beweglichen Abschnitt 5 zusammenwirken. Diese stellen sicher, dass nach Durchführen der Stanzbewegung und einem Zurückziehen des beweglichen Abschnitts 5 in Richtung des Stützabschnitts 3 die ausgestanzten Bereiche am Innenausstattungsbauteil an ihrem Ort verbleiben. Hierfür werden die Auswerfer 8a - 8d erst nach dem Zurückziehen des beweglichen Abschnitts 5 in einem weiteren Schritt in Richtung des Abschnitts 3 zurückgezogen.

Insbesondere unter Zuhilfenahme der zuvor beschriebenen kombinierten Stanz- und Schäumvorrichtung kann das nachfolgende Verfahren durchgeführt werden. Bei allen beschriebenen Verfahrensvarianten kann das Schaummaterial entweder bei offenem Werkzeug (Abstand zwischen Ober- und Unterteil) oder geschlossenen Werkzeug durchgeführt werden.

Anfangs ist das am beweglichen Abschnitt 5 angebrachte Schneidmesser 6 innerhalb des Oberteils 100 aufgenommen (Rückzugstellung in Figur 1). Dabei wird das Schneidmesser 6 mittels der Heizpatronen 7 beheizt, und auf eine auf das Material abgestimmte Temperatur gebracht. Die Temperatur liegt im vorliegenden Ausführungsbeispiel im Bereich von 170-220°C.

Da das Stanzwerkzeug im Oberteil 100 in der Rückzugsstellung vorgesehen ist, kann die kombinierte Stanz- und Schäumvorrichtung auch ohne Betätigung des Stanzwerkzeugs 1 nur zum Schäumen verwendet werden.

Ist der Hohlraum 103 (Figur 1) mit einem Schaummaterial aufgefüllt worden, wird das Stanzwerkzeug 1 in Richtung des Unterteils 101, insbesondere in Richtung des Gegenlagers 105 des Unterteils 101 bewegt. In der Stanzstellung verbleibt zwischen der Fläche des Gegenlagers 105 und dem Schneidmesser ein geringer Spalt im Bereich eines Zehntel Millimeters. Nach dem Beschnitt wird die Vorrichtung geöffnet, insbesondere das Oberteil 100 vom Unterteil 101 weg bewegt.

Das hergestellte Strukturbauteil kann dann entnommen werden. Der beschnittene Abfall verbleibt entweder am Untereil 101, oder die Stanzvorrichtung 1 ist derart eingestellt, dass der Abfall auf dem geschäumten Innenausstattungsbauteil zurück bleibt. Er könnte dann beispielsweise zu einem späteren Zeitpunkt durch Aufbringen eines leichten Drucks entnommen werden. Dies könnte manuell durchgeführt werden.

Bei einer weiteren Ausführungsform der kombinierten Stanz- und Schäumvorrichtung ist die Stanzvorrichtung im Unterteil 101 positioniert. Somit dringt das Stanzwerkzeug 1 erst in die Dekoroberfläche 51 ein, und durchdringt anschließend das Schaummaterial. Die Betätigung der Stanzvorrichtung 1 zur Herstellung der Öffnungen im Innenausstattungsbauteil ist jedoch grundsätzlich entsprechend der zuvor beschriebenen Ausführungsform.

In einer weiteren Variante ist es vorgesehen, dass mehrere Stanzvorrichtungen 1 am Werkzeug vorgesehen sind, und somit zumindest eine Stanzvorrichtung am Oberteil 100, und eine Stanzvorrichtung am Unterteil 101. Diese können in Kombination zueinander wirken, oder auch einzeln betätigt werden. Auch ist es möglich, das Innenausstattungsbauteil jeweils teilweise von einer Seite auszustanzen, sodass sich durch Kombination der Schnitte ein Durchgang im Innenausstattungsbauteil ergibt.

Ferner ist es möglich, dass mit der kombinierten Stanz- und Schäumvorrichtung ein Teilbeschnitt durchgeführt wird. Hierbei ist das Stanzwerkzeug beispielsweise im Unterteil 101 (Dekoroberflächenseite) vorgesehen. Dabei wird ausgehend vom Unterteil 101 eine Schneidbewegung durch die Dekoroberfläche 51 sowie das Schaummaterial durchgeführt. Im Oberteil ist der Träger 50 mit bereits eingebrachten Öffnungen eingelegt. Solche Öffnungen können mit einem anderen, vorgeschalteten Verfahren hergestellt werden, beispielsweise mittels eines Spritzgusswerkzeuges. Die Stanzvorrichtung 1 durchdringt anschließend die Dekoroberfläche, das Schaummaterial und dringt auch in die bereits ausgebildeten Öffnungen ein. Dabei wird das Schaummaterial aus diesen Öffnungen entfernt.

Ferner kann es auch vorgesehen sein, dass das Stanzwerkzeug 1 zuerst die Dekoroberfläche 51 durchtrennt, und derart in die im Träger 50 bereits ausgebildeten Öffnungen eindringt, dass das im späteren Schäumprozess eingebrachte Schäummaterial nicht in den Bereich dieser Öffnungen gelangen kann.
Demnach wird zuerst der Träger 50 und die Dekoroberfläche 51 eingelegt (jeweils in das Ober- und Unterteil). Im nachfolgenden Schritt wird in den Hohlraum. 103 ein Schaummaterial eingeführt, und das Werkzeug wird geschlossen. Beim alternativ möglichen geschlossenen Schäumen wird das Werkzeug zuerst geschlossen, und in einem nachfolgenden Schritt das Schaummaterial eingeführt. Das Schaummaterial fängt nach dessen Einführung an zu reagieren, und im Zuge des der Reaktion wird der gesamte Hohlraum 103 ausgefüllt. Zum Ende der Schaumreaktion werden die Dekoroberfläche und der Schaum, durch den inneren Abschnitt des Schneidemessers eingedrückt, und es folgt der jeweilige Beschnitt durch den äußeren Abschnitt des Schneidmessers 6.

Bei dem Beschnitt ausgehend von der Dekoroberfläche mit der Schaummaterialschicht entfällt die Phase der Schaumaufpressung bevor das Messer eine Schneidwirkung entwickelt, wird der weiche Schaum verpresst, bis die dem Messer entgegenwirkende Kraft groß genug ist, den Schnitt zu realisieren. Nach dem Beschnitt wird das Werkzeug geöffnet, und das Innenausstattungsbauteil kann entnommen werden. Der beschnittene Abfall verbleibt im Unterteil 101 auf der Rückseite des Trägers 50, und kann beispielsweise manuell entnommen werden. Alternativ ist die Stanzvorrichtung 101 derart eingestellt, dass der beschnittenen Abfall auf dem geschäumten Träger hängenbleibt, und somit zusammen mit dem Innenausstattungsbauteil entnommen wird.

Beim Beschnitt ausgehend von der Dekoroberfläche (beispielsweise Dekoroberfläche mit Schaum) gegen den Träger 50 (Trägerteil bleibt in diesem Fall unbeschnitten), muss der Träger 50 lokal teilweise abgedeckt werden, damit es nicht zu einer Verbindung zwischen dem Trägerteil und dem Schaummaterial kommt. In diesem Fall wird bei der Entnahme lediglich die Dekoroberfläche, bzw. die Dekoroberfläche mit dem Schaummaterial, entnommen. Die Eindringtiefe der Stanzvorrichtung 1 wird hierbei ebenfalls so gewählt, dass es nicht zu einer Berührung zwischen dem Schneidmesser 6 und dem Trägerteil 50 kommt.

In einer weiteren Variante kann auch ein Teilbeschnitt nur am Träger 50 vorgesehen werden. Dies kann solche Bereiche betreffen, die nicht geschäumt wurden. Das Schneidmesser 6, das auf die für das Trägermaterial optimierte Temperatur aufgeheizt wurde, ist bei dieser Variante entweder im Ober- oder Unterteil positioniert.

## Patentansprüche

1. Vorrichtung zur Herstellung von
Innenausstattungsbauteilen mit Öffnungen mittels Aufschäumen, mit
einem Oberteil (100) und einem Unterteil (101), mit denen ein Hohlraum (103) definiert werden kann, wobei ein Schaummaterial in einen Bereich zwischen dem Ober- und Unterteil einführbar ist, wobei
am Ober- und/oder Unterteil (100, 101) eine Stanzvorrichtung (1) angebracht ist, die ein Schneidmittel (6) aufweist, das in den Hohlraum (103) einfahrbar ist, **dadurch gekennzeichnet, dass** das Schneidmittel (6) beheizbar ist, wobei
die Stanzvorrichtung (1) mindestens einen Auswerfer (8a-8d) aufweist, der mit der Bewegung des Schneidmittels (6) zusammenwirken kann.

2. Vorrichtung nach Anspruch 1, bei der das Schneidmittel (6) mehrere Schneidmittelabschnitte (6a-6e) aufweist.

3. Vorrichtung gemäß Anspruch 1, bei der das Schneidmittel mittels Heizpatronen (7) beheizbar ist.

4. Vorrichtung gemäß einem der vorangegangen Ansprüche,
**dadurch gekennzeichnet, dass** das Schneidmittel (6) mittels Pneumatik, Hydraulik, mittels eines Elektromotors oder mechanisch verfahrbar.

5. Verfahren zur Herstellung eines Innenausstattungsbauteils mit Öffnungen mittels Aufschäumen, mit den Schritten:
Einlegen eines Trägers (50) sowie einer Dekoroberfläche (51) in eine Vorrichtung zum Ausbilden eines Innenausstattungsbauteils,
Einführen von Schaummaterial in einen zwischen dem Träger (50) und der Dekoroberfläche (51) ausgebildeten Bereich(103)
Verstellen eines Schneidmittels einer Stanzvorrichtung (1), damit das Schneidmittel (6) zumindest abschnittsweise in den Hohlraum (103) eindringt,
Entnehmen des Innenausstattungsbauteils, **dadurch gekennzeichnet dass** das Schneidmittel vor dem Verstellen aufgewärmt wird und
wobei
die durch die Verstellbewegung des Schneidmittels (6) ausgestanzten Abschnitte des Innenausstattungsbauteils mittels eines Auswerfers (8a-8d) entfernt werden.

6. Verfahren gemäß Anspruch 5, bei dem das Verstellen des Schneidmittels von der Seite des Trägers und/oder der Seite der Dekoroberfläche stattfindet.

7. Verfahren gemäß einem der Ansprüche 5-6, bei dem durch das Verstellen des Schneidmittels (6) ein Teilbeschnitt durchgeführt wird, wodurch entweder der Träger oder die Dekoroberfläche jeweils mit Schaummaterial beschnitten wird.

8. Verfahren gemäß einem der Ansprüche 5-7, bei dem das Schneidmittel auf eine Temperatur im Bereich von 170-220°C aufgewärmt wird.

## Claims

1. Apparatus for the manufacture of interior trim components with openings by foaming, having
an upper portion (100) and a lower portion (101) with which a cavity (103) can be defined, wherein a foam material can be introduced into a region between the upper and lower portions, wherein
on the upper and/or lower portion (100, 101) is mounted a punching apparatus (1) having a cutting means (6) which can be moved into the cavity (103),
**characterised in that** the cutting means (6) is heatable, wherein
the punching apparatus (1) has at least one ejector (8a-8d) which can cooperate with the movement of the cutting means (6).

2. Apparatus according to claim 1, in which the cutting means (6) has several cutting means sections (6a-6e).

3. Apparatus according to claim 1, in which the cutting means is heatable by means of heating cartridges (7).

4. Apparatus according to any of the preceding claims, **characterised in that** the cutting means (6) is movable mechanically, by means of pneumatics or hydraulics or by means of an electric motor.

5. Method for the manufacture of an interior trim component with openings by foaming, with the steps of:
laying a substrate (50) and a decorative surface (51) in an apparatus for forming an interior trim component,
introducing foam material into a region (103) formed between the substrate (50) and the decorative surface (51),
displacing a cutting means of a punching apparatus (1) so that the cutting means (6) in at least one section enters the cavity (103),
withdrawing the interior trim component,
**characterised in that** the cutting means is heated up before displacement and
wherein the sections of the interior trim component which are punched out by the displacing movement of the cutting means (6) are removed by means of an ejector (8a-8d).

6. Method according to claim 5, in which displacement of the cutting means takes place from the side of the substrate and/or the side of the decorative surface.

7. Method according to either of claims 5-6, in which partial trimming is carried out by the displacement of the cutting means (6), as a result of which either the substrate or the decorative surface is trimmed with foam material.

8. Method according to any of claims 5-7, in which the cutting means is heated to a temperature within the range of 170-220°C.

## Revendications

1. Dispositif servant à fabriquer des composants d'équipement intérieur comprenant des ouvertures au moyen d'un moussage, comprenant :
une partie supérieure (100) et une partie inférieure (101), à l'aide desquelles une cavité (103) peut être définie, un matériau en mousse pouvant être introduit dans une zone entre la partie supérieure et la partie inférieure, dans lequel :
un dispositif d'estampage (1) est mis en place sur la partie supérieure et/ou la partie inférieure (100, 101), lequel dispositif présente un moyen de découpage (6), qui peut être entré à l'intérieur de la cavité (103), **caractérisé en ce que** le moyen de découpage (6) peut être chauffé,
le dispositif d'estampage (1) présentant au moins un éjecteur (8a - 8d), qui peut interagir avec le mouvement du moyen de découpage (6).

2. Dispositif selon la revendication 1, dans lequel le moyen de découpage (6) présente plusieurs sections de moyen de découpage (6a - 6e).

3. Procédé selon la revendication 1, dans lequel le moyen de découpage peut t être chauffé au moyen de cartouches chauffantes (7).

4. Dispositif selon l'une quelconque des revendications précédentes, **caractérisé en ce que** le moyen de découpage (6) peut être déplacé au moyen d'un système pneumatique, d'un système hydraulique, au moyen d'un moteur électrique ou de manière mécanique.

5. Procédé servant à fabriquer un composant d'équipement intérieur comprenant des ouvertures au moyen d'un moussage, comprenant les étapes suivantes consistant à :
placer un support (50) ainsi qu'une surface décorative (51) dans un dispositif afin de réaliser un composant d'équipement intérieur,
introduire un matériau en mousse dans une zone (103) ménagée entre le support (50) et la surface décorative (51),
ajuster un moyen de découpage d'un dispositif d'estampage (1) afin que le moyen de découpage (6) pénètre au moins par endroits dans la cavité (103), retirer le composant d'équipement intérieur, **caractérisé en ce que** le moyen de découpage est chauffé avant l'ajustement, et dans lequel :
les sections, estampées par le mouvement d'ajustement du moyen de découpage (6), du composant d'équipement intérieur sont retirées au moyen d'un éjecteur (8a - 8d).

6. Procédé selon la revendication 5, dans lequel l'ajustement du moyen de découpage a lieu du côté du support et/ou du côté de la surface décorative.

7. Procédé selon l'une quelconque des revendications 5 - 6, dans lequel un rognage partiel est exécuté par l'ajustement du moyen de découpage (6), ce qui permet de rogner avec le matériau en mousse respectivement soit le support, soit la surface décorative.

8. Procédé selon l'une quelconque des revendications 5 à 7, dans lequel le moyen de découpage est chauffé à une température située dans la plage de 170 à 220 °C.
